# EUROPEAN PATENT APPLICATION

(11) **EP 4 195 030 A1**
(43) Date of publication of application: **14.06.2023**
(21) Application number: 20948951.7
(22) Date of filing: 10.08.2020
(51) Int. Cl.: G06F 8/20

(54) **GAME ENGINE-BASED SHADING DATA PROCESSING METHOD AND APPARATUS, AND ELECTRONIC DEVICE**

(71) Applicant: Xiamen Yaji Software Co., Ltd., Xiamen, Fujian 361021 (CN)
(72) Inventor: WU, Yunxiao, Xiamen, Fujian 361021 (CN); LIN, Shun, Xiamen, Fujian 361021 (CN)
(74) Representative: Ipsilon
(86) International application number: PCT/CN2020/108262
(87) International publication number: WO 2022/032452

(57) **Abstract**

An embodiment of the present disclosure provides a game engine-based shading data processing method and apparatus, and an electronic device. The method includes: obtaining a rendering file obtained according to a pre-configured code editing template, where the pre-configured code editing template is fused at least with a first code editing rule and a second code editing rule, where the first code editing rule is used to edit pipeline data corresponding to a rendering manner, and the second code editing rule is used to edit a shader; based on the pipeline data and at least one first shader, generating a corresponding first intermediate file; and, when detecting a graphics drawing operation, performing graphics drawing processing according to the first intermediate file. In the embodiments of the present disclosure, by data serialization, the problem of data faults resulting from multiple rendering processes is eliminated, which solves various problems due to hard-coding of the pipeline data in the shader codes, and facilities writing of the user, as well as improves the running efficiency of obtaining the first intermediate file based on the rendering file.

## Description

### TECHNICAL FIELD

The present disclosure relates to the field of game engine technologies, and in particular to a game engine-based shading data processing method and apparatus, and an electronic device.

### BACKGROUND

Shading flow is a flow in which a shader language of a specific hardware abstraction layer is written and specific drawing flow is controlled by invoking corresponding interface in the codes so as to perform graphics drawing based on model vertex data. GL shading language (GLSL) and high level shader language (HLSL) both are program languages running on a graphic processing unit (GPU) and both run different dependence syntax frameworks. GLSL depends on OpenGL and HLSL depends on Direct3D. Codes written using such languages are called shader.

In the prior arts, in the shaders, it is necessary to specify a pipeline state (e.g. depth template test and back-face culling and the like) for a rendering manner in the codes. This code editing manner is tedious and errors may easily occur especially for a complex scenario and rendering algorithm in which closely-correlated data are dispersed everywhere in the codes, which is unfavorable for iteration and maintenance. Furthermore, since the shader is an external resource, the shader can be usually run only on a specific platform, and cannot be performed across platforms. The pipeline state for the rendering manner also cannot be performed across platforms.

### SUMMARY

The present disclosure provides a game engine-based shading data processing method and apparatus, an electronic device and a computer readable storage medium, so as to solve the above technical problems. The technical solution is described below.

According to a first aspect, there is provided a game engine-based shading data processing method, including:

obtaining a rendering file obtained according to a pre-configured code editing template, where the pre-configured code editing template is fused at least with a first code editing rule for a program language oriented toward data serialization and a second code editing rule for a shading language oriented toward a specified platform, the first code editing rule is used to edit pipeline data corresponding to a rendering manner, and the second code editing rule is used to edit a shader;

parsing the rendering file to obtain the pipeline data and at least one first shader, and according to the pipeline data and at least one first shader, generating a corresponding first intermediate file; and,

when detecting a graphics drawing operation, performing graphics drawing processing according to the first intermediate file.

According to a second aspect, there is provided a game engine-based shading data processing apparatus, including:

a file obtaining module, configured to obtain a rendering file obtained according to a pre-configured code editing template, where the pre-configured code editing template is fused at least with a first code editing rule for a program language oriented toward data serialization and a second code editing rule for a shading language oriented toward a specified platform, the first code editing rule is used to edit pipeline data corresponding to a rendering manner, and the second code editing rule is used to edit a shader;

a file parsing module, configured to parse the rendering file to obtain the pipeline data and at least one first shader, and according to the pipeline data and at least one first shader, generate a corresponding first intermediate file; and,

a data processing module, configured to, when a graphics drawing operation is detected, perform graphics drawing processing according to the first intermediate file.

According to a third aspect, there is provided an electronic device, including:
one or more processors;
a memory; and
one or more application programs, where the one or more application programs are stored in the memory and executed by the one or more processors to perform the above game engine-based shading data processing method.

According to a fourth aspect, there is provided a computer readable storage medium, storing a computer program which is executed by a processor to perform the above game engine-based shading data processing method.

### BRIEF DESCRIPTION OF THE DRAWINGS

In order more clearly describe the technical solutions in the embodiments of the present disclosure, the drawings involved in descriptions of the embodiments of the present disclosure will be briefly introduced below.
FIG. 1 is a flowchart illustrating a game engine-based shading data processing method according to an embodiment of the present disclosure.
FIG. 2 is a schematic diagram illustrating a processing flow for a shader in a game engine-based shading data processing method according to an embodiment of the present disclosure.
FIG. 3 is a structural schematic diagram illustrating a game engine-based shading data processing apparatus according to an embodiment of the present disclosure.
FIG. 4 is a structural schematic diagram illustrating an electronic device according to an embodiment of the present disclosure.

### DETAILED DESCRIPTION OF THE EMBODIMENTS

The embodiments of the present disclosure are described in details with illustrations shown in the accompanying drawings, where same or similar numerals represent same or similar elements or elements having same or similar function throughout the specification. The embodiments described by referring to the accompanying drawings are illustrative and are used only to explain the present disclosure rather than limit the present disclosure.

Those skilled in the art should understand that the terms "one" "a", "the", and "said" in singular form also include plurality unless otherwise clearly stated. It should be further understood that, the term "comprise" used in the specification of the present disclosure refers to presence of the features, integers, steps, operations, elements and/or components, but does not preclude presence or addition of one or more other features, integers, steps, operations, elements, components and/or combinations thereof. It should be understood that, when it is called that an element is connected or coupled to another element, such element can be directly connected or coupled to the other element, or an intermediate element is present. Furthermore, the terms "connect" or "couple" used herein may include wireless connection or wireless coupling. The term "and/or" used herein includes any single or all combinations of one or more associated listed items.

The technical solutions of the present disclosure and the manners of solving the above technical problems by the technical solutions will be detailed below with specific embodiments. The several specific embodiments below can be mutually combined, and same or similar concepts or processes may not be repeated in some embodiments. The embodiments of the present disclosure will be described below in combination with the drawings.

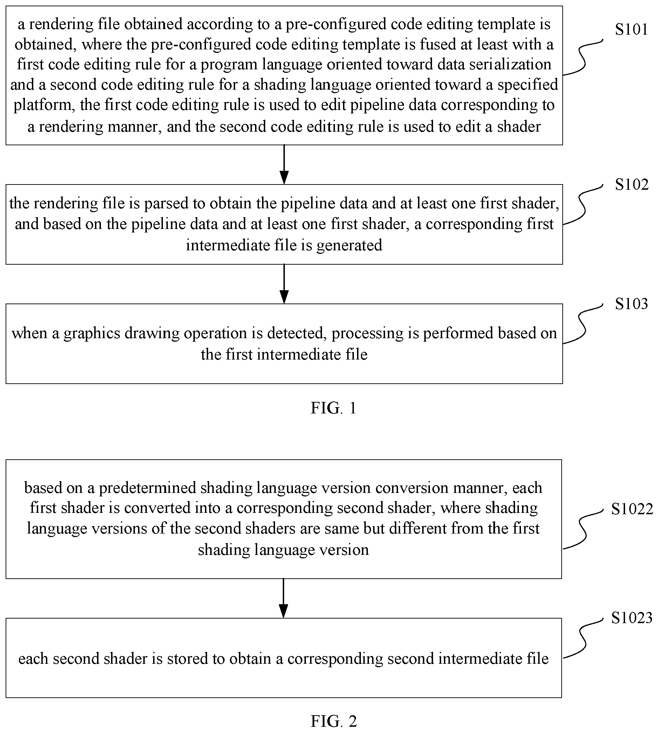

An embodiment of the present disclosure provides a game engine-based shading data processing method. As shown in FIG. 1, the method includes steps S101 to S103.

At step S101, a rendering file obtained according to a pre-configured code editing template is obtained, where the pre-configured code editing template is fused at least with a first code editing rule for a program language oriented toward data serialization and a second code editing rule for a shading language oriented toward a specified platform. The first code editing rule is used to edit pipeline data corresponding to a rendering manner, and the second code editing rule is used to edit a shader.

In an embodiment of the present disclosure, the code editing functions of at least two syntaxes are provided by the pre-configured code editing template, that is, a user may use two syntaxes (i.e. a program language oriented toward data serialization and a shading language oriented toward a specified platform) at the same time to perform code editing on the code editing template. By fusing the first code editing rule of the program language oriented toward data serialization, the user is helped to perform code editing, thus reducing the code editing difficulty and improving the code editing efficiency.

Specifically, the pre-configured code editing template is usually provided with a specified separation manner to help the user to perform code editing, so as to increase the editing efficiency of the user on the code editing template. By using the specified special separators, the pipeline data and each first shader can be quickly identified so as to adapt to a recursive descent parser. That is, by using the specified special separation manner, a start point and an end point of a recursion process are determined and finally a syntax tree corresponding to the rendering file is obtained, thereby achieving the purpose of quickly parsing the rendering file. In an embodiment of the present disclosure, "%{"and "}%"are used as a specified separation manner. For example, the pipeline data is represented by the form %{pipeline data of YAML format (i.e. declared information)}%, and each first shader is represented by the form %{ GLSL syntax-edited codes (i.e. shader contents) }%. It should be noted that "%{"and "}%"are only one of representation forms for the separation manner, and another separation manner may also be used based on actual requirements in practical applications, which will not be enumerated one by one.

For another example, the code editing template provided by the embodiments of the present disclosure provides the code editing rules of two syntaxes. Further, in order to help the user to perform code writing , the code editing template further provides a header file reference mechanism, an entry function encapsulation mechanism, and function-like preprocessor macro and the like which are helpful for code writing of the user such that the user can quickly write the codes. The header file reference mechanism realizes the effect of code multiplexing and reduction of writing workload of the user. For example, the user writes three shaders, for which a same function is applied. In this case, as long as the function is written, it is possible to declare the function in the code part of the shaders needing the function so as to achieve reference for the function. The entry function encapsulation refers to an encapsulated main function. The main function of the shading language oriented to the specified platform can be automatically generated in the pre-configured code editing template, without needing the user to write it in the code editing template, thereby greatly improving the editing efficiency of the user in the code editing template. The function-like preprocessor macro refers to a preprocessor macro accepting parameters. The user may input the parameters by using the function-like preprocessor macro, such that the input parameters are used as the code part of the subsequent shaders.

In an embodiment of the present disclosure, the pipeline data corresponding to the rendering manner mainly includes depth template test, back-face culling and transparent blending and the like.

In an embodiment of the present disclosure, the specified platform refers to a platform running a shading flow, which usually includes a native platform and a non-native platform. The native platform refers to a platform directly related to hardware, such as Windows, MacOS, iOS, Android; and the non-native platform refers to a platform of various browsers, which is not directly related to hardware, for example, the browsers may include PC browsers such as Chrome, Edge, Firefox, or mobile browsers. In practical applications, the specified platform may be a native platform or a non-native platform. In an embodiment of the present disclosure, the specified platform generally is a non-native platform.

In an embodiment of the present disclosure, the serialization refers to a process in which a data structure is converted into a binary data flow or text flow. The pipeline data corresponding to the rendering manner is serialized to ensure the data has a same meaning in different platform environments, facilitating data storage and cross-platform transmission. The serialization of the pipeline data corresponding to the rendering manner not only makes the machine run easily but also helps the user to perform code writing. In this way, the problem of high iteration and maintenance costs resulting from the fact that the closely-correlated data are dispersed in different positions due to complex scenario and rendering algorithm in the prior arts can be solved.

In an embodiment of the present disclosure, the YAML language is a program language oriented to data serialization. Thus, the user may directly use the YAML language to write the pipeline data corresponding to the rendering manner in the pre-configured code editing template. Since the YAML language is a language for purely expressing information, it is highly readable and easier to write. Furthermore, after the data is represented by using the YAML language, executable commands injected by codes are not included in the data. Therefore, the parsing process will be safer.

In a specific application, the serialization of the pipeline data corresponding to the rendering manner can be achieved by using XML language or JSON language. It is to be noted that any program language oriented to data serialization can be used a language for serializing the pipeline data corresponding to the rendering manner, and these languages will not be enumerated one by one herein.

Specifically, the code editing rule used in the code editing template can be represented in the following manner:

```
    CCEffect YAML %{ # YAML code }%;
    or CCEffect XML %{ <!-XML code --> }%.
```

At step S102, the rendering file is parsed to obtain the pipeline data and at least one first shader, and based on the pipeline data and at least one first shader, a corresponding first intermediate file is generated.

Specifically, the pipeline data and the first shader corresponding to the rendering manner are stored as separate files respectively; or stored in different areas of a same file respectively.

In an embodiment of the present disclosure, each first shader in the rendering file refers to a shader pre-edited by a user, and each first shader generally includes two classes of shaders, namely, a vertex shader and a fragment shader.

For example, if VertexBuffer is used to define a triangle forming a geometric shape, a series of vertex data included in VertexBuffer are input into the shader for processing. In specific application, the GPU assembles the output data of the vertex shader into triangles which are then clipped appropriately, and next, processed into a new format in a rasterization unit. The processed new format is a data format formed of fragments, where the fragment is a simple data format, and each fragment contains all pixels that can be displayed by one triangle on a screen.

At step S103, when a graphics drawing operation is detected, graphics drawing processing is performed based on the first intermediate file.

In an embodiment of the present disclosure, the graphics drawing operation is an operation of a user in a game engineering of a client, such as drag and single click and the like.

In an embodiment of the present disclosure, the pipeline data determines the manner of the graphics drawing and whether the shader (especially in a case of multiple shaders declared in the rendering file) used in the graphics drawing needs to perform the functions such as back-face culling. Specifically, the back-face culling refers to a data processing manner in which fragments with back toward the viewer are rejected and fragments with front toward the viewer (visible to the viewer) are calculated during rendering.

For example, when there are a plurality of shaders, which are a shader 1, a shader 2 and a shader 3 respectively, the pipeline data corresponding to the rendering manner specifies that: for a same drawing object (e.g. a sphere), for the first time, the sphere is drawn by using the shader 1 with the back-face culling function enabled, and for the second time, luminous effect is added to the drawn sphere by using the shader 2 with the back-face culling function disabled. Therefore, when a graphics drawing operation is detected, processing is performed based on the first intermediate file, so as to complete the graphics drawing.

In an embodiment of the present disclosure, combination of the program language oriented to data serialization and the shading language oriented to specified platform based on the pre-configured code editing template can help the user to write by using the program language oriented to data serialization to serialize the pipeline data. In this way, the problem of data faults resulting from multiple rendering processes is eliminated, which solves the problem of inability to organize complex data and multiplex the data due to hard-coding of the pipeline data in the shader codes, thereby improving the flexibility of the data extension. Furthermore, the rendering file is parsed and based on the pipeline data and the at least one first shader obtained by parse, the corresponding first intermediate file is generated. In this way, it is guaranteed that processing can be performed based on the first intermediate file in subsequent rendering process so as to improve the running efficiency of the first intermediate file (i.e. program).

In an implementation, as shown in FIG. 1, generating the corresponding first intermediate file based on the parsed pipelines data and at least one first shader includes the following steps.

At S 1021 (not shown), the pipeline data and each first shader are stored to obtain a corresponding first intermediate file.

In another embodiment, the step S 1021 of storing the pipeline data and each first shader includes:

extracting at least one first variable corresponding to each first shader and a macro corresponding to each first variable, and storing the at least one first variable corresponding to each first shader and the macro corresponding to each first variable.

In an embodiment of the present disclosure, data extraction is performed to obtain at least one first variable (i.e. variables of shading-related information (such as color and lighting etc.)) and the macro corresponding to each first variable included in each first shader, such that the machine can perform quick processing based on the extraction result subsequently.

Specifically, the macro corresponding to each first variable is used to represent a use state of the shading-related information corresponding to the variable. For example, the state of the macro corresponding to a color variable is true (i.e. in a used state), the variable may be used; or, the state of the macro corresponding to a map variable is false (i.e. in a non-used state), the shader cannot use the map function.

Specifically, the pipeline data and each first shader may be stored as lightweight data, for example, as data of JSON format, and then the first intermediate file obtained after storage is taken as a running file.

In another implementation, the shading language version of each first shader is the first shading language version as shown in FIG. 2. After the pipeline data and each first shader are stored to obtain the corresponding first intermediate file, the method further includes the following steps.

At step S 1022, based on a predetermined shading language version conversion manner, each first shader is converted into a corresponding second shader, where shading language versions of the second shaders are same but different from the first shading language version.

At step S1023, each second shader is stored to obtain a corresponding second intermediate file.

In an embodiment of the present disclosure, based on the predetermined shading language version conversion manner, each first shader is converted into a corresponding second shader. In this embodiment, shaders adapting to different terminal device environments can be obtained and thus the user is not required to edit different versions of shaders based on different platform environments. By using one shader resource, the purpose of use across platforms is achieved, and the developments costs are reduced. Further, the problem of the influence of mismatching between the device environment of the terminal device and the shader on the subsequent graphics drawing process can be avoided.

In an embodiment of the present disclosure, the predetermined shading language version conversion manner may be a conversion manner from a high shading language version to a low shading language version, or from a low shading language version to a high shading language version. For example, the predetermined shading language version conversion manner may be a conversion manner from GLSL3.0 to GLSL1.0 or from GLSL1.0 to GLSL3.0.

Specifically, the predetermined shading language version conversion manner may be a text replacement method. Specifically, based on standard provisions (i.e. syntax specifications) corresponding to the shaders of different shading language versions, a direct mapping or approximate mapping between different syntaxes (i.e. different versions of shading languages) is firstly determined, and then pre-stored. In this case, when an input file (i.e. the codes of each first shader) is received, parsing can be directly performed, that is, the codes of each first shader are parsed and extracted based directly on the direct mapping or approximate mapping between different syntaxes to obtain a syntax tree corresponding to the codes of the each first shader. The syntax tree herein is also called an abstract syntax tree, which is an abstract representation of a source code syntax structure. Further, the syntax structure is a syntax structure representing the program language in the tree form, where each node in the tree represents one structure in the source codes. Specifically, each first shader can be processed by using a syntax parser to obtain the syntax tree of each first shader. Then, based on the obtained syntax tree and the direct mapping or approximate mapping between different syntaxes, data conversion is performed to obtain a converted syntax tree, and then based on the converted syntax tree, target codes are generated. Finally, the purpose of converting a shader of one shading language version into a shader of another shading language version can be achieved.

It is to be noted that the purpose of converting a shader of one shading language version into a shader of another shading language version can be achieved by using another method in practical applications, and no redundant descriptions are made herein.

For example, if the predetermined shading language version conversion manner is the conversion manner from GLSL3.0 to GLSL1.0, when one structure body in the first shader can include, at the same time, three pieces of uniform data (i.e. shading-related information) such as color information, lighting information and texture information, the three pieces of uniform data extracted from the first shader is represented again in the form of GLSL1.0, that is, one piece of uniform data is represented in one structure body.

In another implementation, as shown in FIG. 1, before, based on the predetermined shading language version conversion manner, each first shader in the first intermediate file is converted into the corresponding second shader as in step S1022, the method further includes the following step.

At step S 1023 (not shown), whether at least one shading language version lower than the first shading language version is present is determined.

The step S1022 of, based on the predetermined shading language version conversion manner, converting each first shader into the corresponding second shader includes:

if it is present, converting each first shader into the corresponding second shader based on the conversion manner between the first shading language version and each low shading language version.

An embodiment of the present disclosure provides a conversion from a shader of high shading language version to a shader of low shading language version. For example, in the embodiment of the present disclosure, the shader of GLSL3.0 can be converted into the shader of GLSL1.0, that is, the embodiment of the present disclosure provides the function of converting the first shader of high shading language version into the second shader of low shading language version. Therefore, the user is required to use the shading language of high version to edit the first shader in the rendering file. If the user uses GLSL1.0 language to edit at least one first shader in the rendering file, since there is no shading language with the version lower than GLSL1.0, the each first shader is no longer converted.

In another implementation, after the rendering file is obtained based on the pre-configured code editing template in step S102, the method further includes the following steps.

At step S1024 (not shown), based on a pre-configured syntax detection module, detection is performed for any one of the following in the rendering file: codes corresponding to the pipeline data, codes corresponding to each first shader, and whether a shader type included in each first shader is consistent with a predetermined shader type.

At step S1025 (not shown), in a case of presence of a syntax error, corresponding prompt information is generated.

In an embodiment of the present disclosure, by using the pre-configured syntax detection module, the code editing efficiency of the user in the pre-configured code editing template can be improved, and the syntax detection steps of various parts in the rendering file are moved from the graphics drawing stage (i.e. application stage) to the compiling stage with error thrown out based on the prompt information. In this case, the user can quickly determine the error part of the code editing based on the syntax detection result, and further perform code modification. In this way, the difficulty of user debugging can be reduced and the efficiency of the subsequent processing for the rendering file is finally increased.

For example, the syntax detection module determines whether the codes corresponding to each first shader in the rendering file include a vertex shader and a fragment vertex at the same time. If it is determined that the vertex shader and the fragment vertex are not included at the same time, it is determined that a syntax error is present and corresponding prompt information is generated. Optionally, it is determined whether a syntax error is present in the characters written using the YAML language in the rendering file and whether a syntax error is present in the codes written using the GLSL language.

In the above embodiments and their implementations, the specified platform generally is set to a Web platform, that is, the programming language for the shader is a program language for the Web platform. For example, by using GLSL syntax, code editing is performed in the pre-configured code editing template, thereby achieving the defined purpose of the shader.

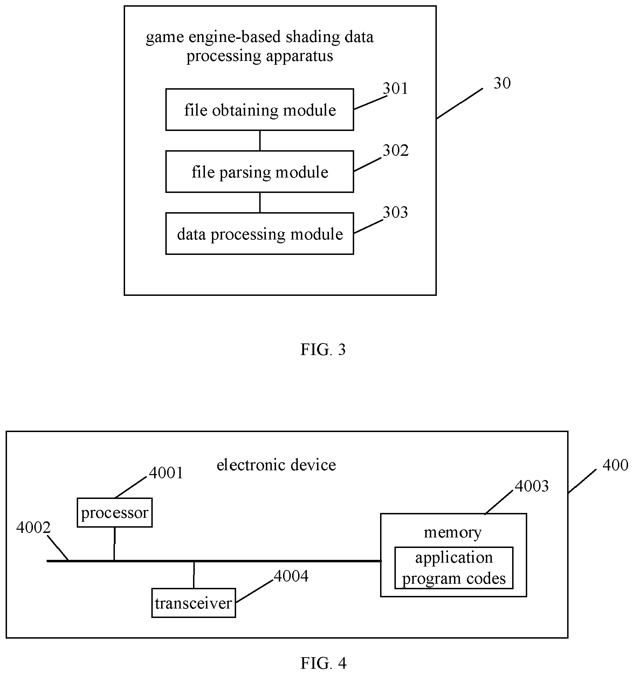

An embodiment of the present disclosure provides a game engine-based shading data processing apparatus. As shown in FIG. 3, the game engine-based shading data processing apparatus 30 may include a file obtaining module 301, a file parsing module 302 and a data processing module 303.

The file obtaining module 301 is configured to obtain a rendering file obtained according to a pre-configured code editing template, where the pre-configured code editing template is fused at least with a first code editing rule for a program language oriented toward data serialization and a second code editing rule for a shading language oriented toward a specified platform, the first code editing rule is used to edit pipeline data corresponding to a rendering manner, and the second code editing rule is used to edit a shader.

The file parsing module 302 is configured to parse the rendering file to obtain the pipeline data and at least one first shader, and according to the pipeline data and at least one first shader, generate a corresponding first intermediate file.

The data processing module 303 is configured to, when a graphics drawing operation is detected, perform graphics drawing processing according to the first intermediate file.

In an embodiment of the present disclosure, combination of the program language oriented to data serialization and the shading language oriented to specified platform based on the pre-configured code editing template can help the user to write by using the program language oriented to data serialization to serialize the pipeline data. In this way, the problem of data faults resulting from multiple rendering processes is eliminated, which solves the problem of inability to organize complex data and multiplex the data due to hard-coding of the pipeline data in the shader codes, thereby improving the flexibility of the data extension. Furthermore, the rendering file is parsed and based on the pipeline data and the at least one first shader obtained by parse, the corresponding first intermediate file is generated. In this way, it is guaranteed that processing can be performed based on the first intermediate file in subsequent rendering process so as to improve the running efficiency of the first intermediate file (i.e. program).

Furthermore, the file parsing module is configured to:
obtain a corresponding first intermediate file by storing the pipeline data and each first shader.

Furthermore, the file parsing module is further configured to:
extract at least one first variable corresponding to each first shader and a macro corresponding to each first variable, and store the at least one first variable corresponding to each first shader and the macro corresponding to each first variable.

Furthermore, a shading language version of each first shader is a first shading language version, and the file parsing module is further configured to:
based on a predetermined shading language version conversion manner, convert each first shader into a corresponding second shader, where shading language versions of the second shaders are same but different from the first shading language version; and,
store each second shader to obtain a corresponding second intermediate file.

Furthermore, the file parsing module is further configured to:
determine whether at least one shading language version lower than the first shading language version is present;
when at least one shading language version lower than the first shading language version is present, based on a conversion manner between the first shading language version and each lower shading language version, convert each first shader in the first intermediate file into the corresponding second shader.

Furthermore, after obtaining the rendering file obtained according to the pre-configured code editing template, the data obtaining module is further configured to:
based on a pre-configured syntax detection module, perform detection for any one of the following in the rendering file: codes corresponding to the pipeline data, codes corresponding to each first shader, and whether a shader type comprised in each first shader is consistent with a predetermined shader type; and,
in a case of presence of a syntax error, generate corresponding prompt information.

Furthermore, the specified platform is a Web platform.

The game engine-based shading data processing apparatus in the embodiments of the present disclosure can perform the game engine-based shading data processing method provided in the embodiments of the present disclosure and thus its implementation principle is similar and will not be repeated herein.

An embodiment of the present disclosure provides an electronic device. As shown in FIG. 4, the electronic device 400 includes a processor 4001 and a memory 4003, where the processor 4001 and the memory 4003 are connected via a bus 4002. Furthermore, the electronic device 400 may further include a transceiver 4004. It is to be noted that the number of the transceivers 4004 is not limited to 1 in practical applications. The structure of the electronic device 400 does not constitute any limitation to the embodiments of the present disclosure.

The processor 4001 may be a central processing unit (CPU), a general processor, a digital signal processor (DSP), an application specific integrated circuit (ASIC), a field programmable gate array (FPGA) or other programmable logic devices, transistor logic devices, hardware components or any combination thereof. It can implement the logic blocks, modules and circuits of the embodiments described in combination with the contents of the present disclosure. The processor 4001 may also be a combination for implementing computation function, for example, may be a combination including one or more microprocessors, or a combination of DSP and microprocessor or the like.

The bus 4002 may include one passage for conveying information between the above components. The bus 4002 may also be a PCI bus or EISA bus or the like. The bus 4002 may include an address bus, a data bus, a control bus and the like. For ease of representation, it is represented by one thick line in FIG. 4, which does not mean there is only one bus or one type of buses.

The memory 4003 may be a read only memory (ROM), or another type of static storage devices capable of storing static information and instructions, an random access memory (RAM), or another type of dynamic storage devices capable of storing information and instructions, and may also be Electrically Erasable Programmable read only memory (EEPROM), CD-ROM, or other compact disk storage or disk storage (including compression disk, laser disk, optical disk, digital universal disk, and blue ray disk and the like), magnetic disk storage medium, or other magnetic storage device, or any other medium capable of carrying or storing desired program codes in the form of instruction or data structure, which can be accessed by a computer, which is not limited herein.

The memory 4003 is configured to store application program codes for performing the solution of the present disclosure under the control of the processor 4001. The processor 4001 is configured to execute the application program codes stored in the memory 4003 to perform the actions of the game engine-based shading data apparatus provided by the embodiment shown in FIG. 3.

In an embodiment of the present disclosure, combination of the program language oriented to data serialization and the shading language oriented to specified platform based on the pre-configured code editing template can help the user to write by using the program language oriented to data serialization to serialize the pipeline data. In this way, the problem of data faults resulting from multiple rendering processes is eliminated, which solves the problem of inability to organize complex data and multiplex the data due to hard-coding of the pipeline data in the shader codes, thereby improving the flexibility of the data extension. Furthermore, the rendering file is parsed and based on the pipeline data and the at least one first shader obtained by parse, the corresponding first intermediate file is generated. In this way, it is guaranteed that processing can be performed based on the first intermediate file in subsequent rendering process so as to improve the running efficiency of the first intermediate file (i.e. program).

An embodiment of the present disclosure provides a computer readable storage medium, storing a computer program, where the program is executed by a processor to perform the method of the above embodiments.

An embodiment of the present disclosure provides a computer readable storage medium. Compared with the prior arts, combination of the program language oriented to data serialization and the shading language oriented to specified platform based on the pre-configured code editing template can help the user to write by using the program language oriented to data serialization to serialize the pipeline data. In this way, the problem of data faults resulting from multiple rendering processes is eliminated, which solves the problem of inability to organize complex data and multiplex the data due to hard-coding of the pipeline data in the shader codes, thereby improving the flexibility of the data extension. Furthermore, the rendering file is parsed and based on the pipeline data and the at least one first shader obtained by parse, the corresponding first intermediate file is generated. In this way, it is guaranteed that processing can be performed based on the first intermediate file in subsequent rendering process so as to improve the running efficiency of the first intermediate file (i.e. program).

The computer readable storage medium provided by the embodiments of the present disclosure is applicable to the above method embodiments. No redundant descriptions are made herein.

It should be understood that although various steps in the flowchart of the accompanying drawings are displayed in a sequence as indicated by an arrow, these steps are not necessarily performed in the sequence indicated by the arrow. Unless otherwise clearly stated in the present disclosure, these steps are not limited to any strict sequence and may be performed in another sequence. Furthermore, at least part of the steps in the flowchart of the accompanying drawings may include a plurality of sub-steps or a plurality of stages. These sub-steps or stages are not necessarily completed at a same time but may be performed at different times. These sub-steps or stages are also not necessarily performed in sequence but may be performed in turns or alternately with at least part of other steps or the sub-steps or stages of other steps.

The above descriptions are made merely to some embodiments of the present disclosure. It should be pointed out that those skilled in the art may also make several improvements and modifications without departing from the principle of the present disclosure, and these improvements and modifications shall all fall within the scope of protection of the present disclosure.

## Claims

1. A game engine-based shading data processing method, comprising:
obtaining a rendering file obtained according to a pre-configured code editing template, wherein the pre-configured code editing template is fused at least with a first code editing rule for a program language oriented toward data serialization and a second code editing rule for a shading language oriented toward a specified platform, the first code editing rule is used to edit pipeline data corresponding to a rendering manner, and the second code editing rule is used to edit a shader;
parsing the rendering file to obtain the pipeline data and at least one first shader, and according to the pipeline data and at least one first shader, generating a corresponding first intermediate file; and,
performing, when detecting a graphics drawing operation, graphics drawing processing according to the first intermediate file.

2. The method of claim 1, wherein generating the corresponding first intermediate file comprises:
obtaining a corresponding first intermediate file by storing the pipeline data and each first shader.

3. The method of claim 2, wherein storing the pipeline data and each first shader comprises:
extracting at least one first variable corresponding to each first shader and a macro corresponding to each first variable, and
storing the at least one first variable corresponding to each first shader and the macro corresponding to each first variable.

4. The method of claim 2, wherein a shading language version of each first shader is a first shading language version, and the method further comprises:
after obtaining the corresponding first intermediate file, based on a predetermined shading language version conversion manner, converting each first shader into a corresponding second shader, wherein shading language versions of the second shaders are same but different from the first shading language version; and,
storing each second shader to obtain a corresponding second intermediate file.

5. The method of claim 4, further comprising:
determining, before converting each first shader into the corresponding second shader based on the predetermined shading language version conversion manner, whether at least one shading language version lower than the first shading language version is present; and,
when at least one shading language version lower than the first shading language version is present, based on a conversion manner between the first shading language version and each lower shading language version, converting each first shader into the corresponding second shader.

6. The method of claim 1, further comprising: after obtaining the rendering file obtained according to the pre-configured code editing template, based on a pre-configured syntax detection module, performing detection for any one of the following in the rendering file:
codes corresponding to the pipeline data, codes corresponding to each first shader, and
whether a shader type comprised in each first shader is consistent with a predetermined shader type; and,
in a case of presence of a syntax error, generating corresponding prompt information.

7. The method of claim 1, wherein the specified platform is a Web platform.

8. An electronic device, comprising:
one or more processors; and
a memory, configured to store one or more application programs, wherein the one or more application programs are stored in the memory and executed by the one or more processors for:
obtaining a rendering file obtained according to a pre-configured code editing template, wherein the pre-configured code editing template is fused at least with a first code editing rule for a program language oriented toward data serialization and a second code editing rule for a shading language oriented toward a specified platform, the first code editing rule is used to edit pipeline data corresponding to a rendering manner, and the second code editing rule is used to edit a shader;
parsing the rendering file to obtain the pipeline data and at least one first shader, and according to the pipeline data and at least one first shader, generating a corresponding first intermediate file; and,
performing, when detecting a graphics drawing operation, graphics drawing processing according to the first intermediate file.

9. The electronic device of claim 8, wherein the one or more programs further comprise codes for performing the following operation:
obtaining the corresponding first intermediate file by storing the pipeline data and each first shader.

10. The electronic device of claim 9, wherein the one or more programs further comprise codes for performing the following operations:
extracting at least one first variable corresponding to each first shader and a macro corresponding to each first variable, and storing the at least one first variable corresponding to each first shader and the macro corresponding to each first variable.

11. The electronic device of claim 9, wherein a shading language version of each first shader is a first shading language version,
wherein the one or more programs further comprise codes for performing the following operations:
after obtaining the corresponding first intermediate file, based on a predetermined shading language version conversion manner, converting each first shader into a corresponding second shader, wherein shading language versions of the second shaders are same but different from the first shading language version; and,
storing each second shader to obtain a corresponding second intermediate file.

12. The electronic device of claim 11, wherein the one or more programs further comprise codes for performing the following operations:
before converting each first shader into the corresponding second shader based on the predetermined shading language version conversion manner, determining whether at least one shading language version lower than the first shading language version is present; and,
when at least one shading language version lower than the first shading language version is present, based on a conversion manner between the first shading language version and each lower shading language version, converting each first shader into the corresponding second shader.

13. The electronic device of claim 8, wherein the one or more programs further comprise codes for performing the following operations:
after obtaining the rendering file obtained according to the pre-configured code editing template, based on a pre-configured syntax detection module, performing detection for any one of the following in the rendering file: codes corresponding to the pipeline data, codes corresponding to each first shader, and whether a shader type comprised in each first shader is consistent with a predetermined shader type; and,
in a case of presence of a syntax error, generating corresponding prompt information.

14. The electronic device of claim 8, wherein the specified platform is a Web platform.

15. A computer readable storage medium, storing a computer program which is executed by a processor to:
obtain a rendering file obtained according to a pre-configured code editing template, wherein the pre-configured code editing template is fused at least with a first code editing rule for a program language oriented toward data serialization and a second code editing rule for a shading language oriented toward a specified platform, the first code editing rule is used to edit pipeline data corresponding to a rendering manner, and the second code editing rule is used to edit a shader;
parse the rendering file to obtain the pipeline data and at least one first shader, and according to the pipeline data and at least one first shader, generate a corresponding first intermediate file; and,
when detecting a graphics drawing operation, perform graphics drawing processing according to the first intermediate file.

16. The computer readable storage medium of claim 15, wherein the program further comprises codes for performing the following operations:
obtaining a corresponding first intermediate file by storing the pipeline data and each first shader.

17. The computer readable storage medium of claim 16, wherein the program further comprises codes for performing the following operations:
extracting at least one first variable corresponding to each first shader and a macro corresponding to each first variable, and storing the at least one first variable corresponding to each first shader and the macro corresponding to each first variable.

18. The computer readable storage medium of claim 16, wherein a shading language version of each first shader is a first shading language version,
wherein the program further comprises codes for performing the following operations:
after obtaining the corresponding first intermediate file, based on a predetermined shading language version conversion manner, converting each first shader into a corresponding second shader, wherein shading language versions of the second shaders are same but different from the first shading language version; and,
storing each second shader to obtain a corresponding second intermediate file.

19. The computer readable storage medium of claim 18, wherein the program further comprises codes for performing the following operations:
before converting each first shader into the corresponding second shader based on the predetermined shading language version conversion manner, determining whether at least one shading language version lower than the first shading language version is present; and,
when at least one shading language version lower than the first shading language version is present, based on a conversion manner between the first shading language version and each lower shading language version, converting each first shader into the corresponding second shader.

20. The computer readable storage medium of claim 15, wherein the program further comprises codes for performing the following operations:
after obtaining the rendering file obtained according to the pre-configured code editing template, based on a pre-configured syntax detection module, performing detection for any one of the following in the rendering file: codes corresponding to the pipeline data, codes corresponding to each first shader, and whether a shader type comprised in each first shader is consistent with a predetermined shader type; and,
in a case of presence of a syntax error, generating corresponding prompt information.
